# EUROPEAN PATENT SPECIFICATION

(11) **EP 4 276 424 B1**
(45) Date of publication and mention of the grant of the patent: **09.07.2025**
(21) Application number: 22175557.2
(22) Date of filing: 25.05.2022
(51) Int. Cl.: G01G 21/23

(54) **LATERAL WEIGHING DEVICE**
SEITENWIEGEEINRICHTUNG
DISPOSITIF DE PESAGE LATÉRAL

(30) Priority: 12.05.2022 PT 2022117976; 23.05.2022 PT 2022117992
(43) Date of publication of application: 15.11.2023
(73) Proprietor: Temlógica - Automacao e Sistemas de Medida Industrial Unipessoal, Lda, 2690-439 Santa Iria da Azoia (PT); Sérgio Peixoto Unipessoal, Lda, 4700-120 Braga (PT)
(72) Inventor: Santos Baltazar, João Filipe, 2690-439 Santa Iria da Azoia (PT); Fabião Peixoto, Sérgio André, 4700-120 Braga (PT)
(74) Representative: Lourenço Martinho do Rosário, Ana Margarida

(56) References cited:
- US-A1- 2013 319 072

## Description

### Technical field of the invention

The present invention concerns a weighing equipment, more particularly a weighing equipment that enables weighing objects that are placed laterally in relation to the equipment.

### Scope of the invention

Weighing equipment, i.e., scales, are pieces of equipment whose purpose is to weigh objects and materials. This can be achieved in multiple ways, e.g., by placing an object or material on top of the scale, or by suspension on the arm of a scale. In the latter case, the weighing is done by comparison with standard weights that are placed on the opposite side of the arm.

Currently, methods for weighing products and materials on industrial production lines are still carried out by means of generic scales, such as bench scales or conveyor scales. However, in both cases, weighing time is required to confirm that the weight of the product or material is within the defined parameters and that it is fit to continue on the production line. In this context, the weighing time is a problem because this operation implies a drop in production speed, taking away profitability, and can lead to the loss of a considerable amount of money.

Additionally, because objects or materials are weighed vertically, i.e., on a plate or an arm of the scale, the freedom of positions in which an object or material can be weighed is reduced. This can also be a hindrance in industrial production lines, since it is only possible to perform weighing in a single position, forcing time and resources to be wasted in this operation. The assembly of the production line itself also has to be optimized around scales, so getting rid of this requirement can translate into better use of time and greater profitability.

To solve this problem, the present invention comprises a side-weighing equipment. In this system, an object or material is suspended in a lateral position relative to the weighing equipment, so there is no need to perform the weighing with the object or material on or under the weighing equipment.

### State of the art

Among the state-of-the-art documents that mention weighing equipment, there is a document that presents equipment for performing lateral weighing. Document KR20020029354 discloses a net fixed to a pole, wherein an object is placed on the net and the pole measures the weight of the object via its own deformation, picked up by a sensor that converts the deformation into a weight value.

Document CN103090944 mentions a scale for use on construction cranes, which is placed between the crane hook and the cable system that holds the hook. When an object is lifted by the crane, by means of the hook, the scale measures the weight of the object.

Document US 2013/319072 A1 relates to a load cell with a weighing system having a force application point, a load boom arm for receiving the loads to be weighed at a position remote from the force application point and an adjusting device, wherein the load boom arm extends, in plan view, from the force application point to the load cell in a longitudinal direction.

With regard to state-of-the-art documents mentioning weighing equipment that can perform weighing in motion and that can perform weighing laterally and in suspension, none were found.

### Advantages of the invention

The present invention has as one of its two main advantages the weighing of an object or material that is placed in the weighing equipment laterally, rather than having to be placed on top of the equipment. This provides the system in which this equipment is used a greater degree of freedom with respect to directions, and does not require a system in which the weighing is performed vertically.

The other significant advantage is dynamic weighing. The equipment of the present invention is capable of performing the weighing while in motion, because the arrangement of its components prevents the occurrence of deviations in the measurements caused by vibrations. The arrangement of the components also makes any deviations caused by horizontal movements negligible.

Additionally, the equipment of the present invention presents as an advantage the cancellation of the effects of vibrations caused by other equipment present in the surrounding environment, allowing production lines in which the present invention is incorporated to remain active while weighing is performed.

The equipment of the present invention is designed to be attached to robot heads or arms. However it can also be applied to any other equipment in technical areas that require the weighing of objects or materials.

Another significant advantage of the present invention is its scalability. Due to the low number of components that the equipment of the present invention comprises, it can be increased or decreased in size in order to weigh any type of object or material that is to be weighed, from chemical compounds to cargo ships.

### Brief description of the drawings

These and other features can be easily understood in the accompanying drawings, which should be considered mere examples and in no way restrictive of the scope of the invention. In the drawings, and for illustrative purposes, the measurements of some of the constituents may be exaggerated and not drawn to scale. The absolute dimensions and the relative dimensions do not correspond to the actual relationships for embodiments of the invention.

In a preferred embodiment:

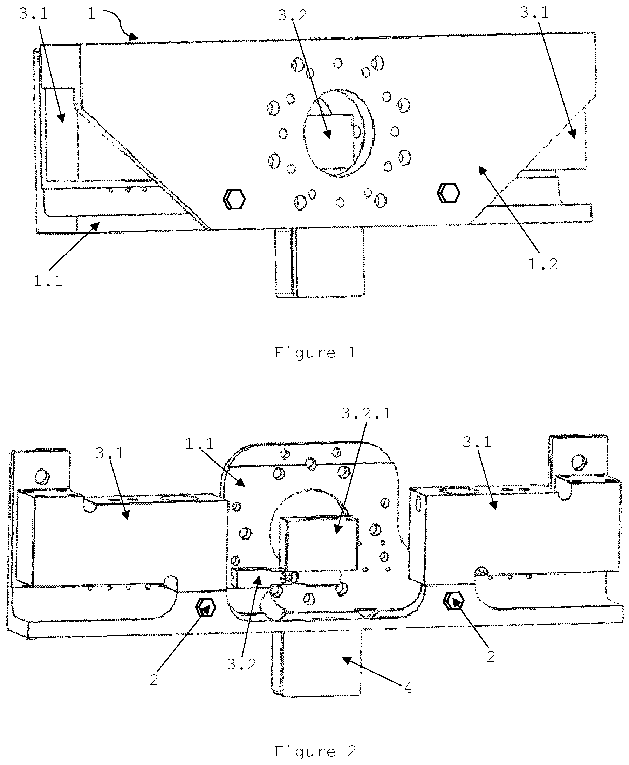

Figure 1 shows a front isometric view of a first embodiment of the present invention.
Figure 2 shows a front isometric view of a first embodiment of the present invention without the plate.

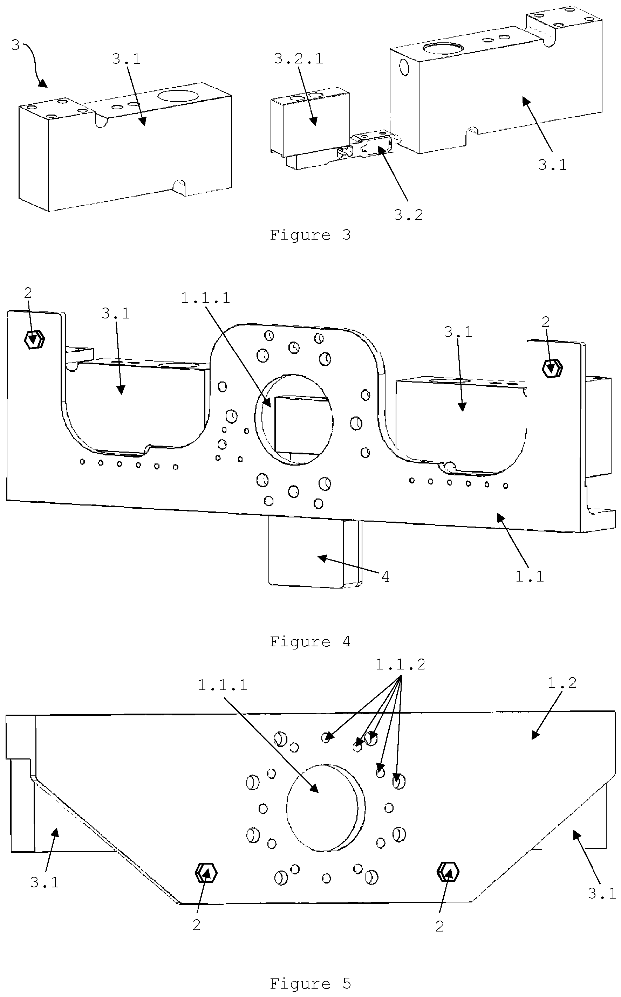

Figure 3 shows a front isometric view of the functional elements in a first embodiment of the present invention.
Figure 4 shows a rear isometric view of a first embodiment of the present invention without the plate.
Figure 5 shows a front isometric view of a first embodiment of the present invention without the base.
Figure 6 shows a rear isometric view of a first embodiment of the present invention without the base.
Figure 7 shows a front isometric view of a second embodiment of the present invention.

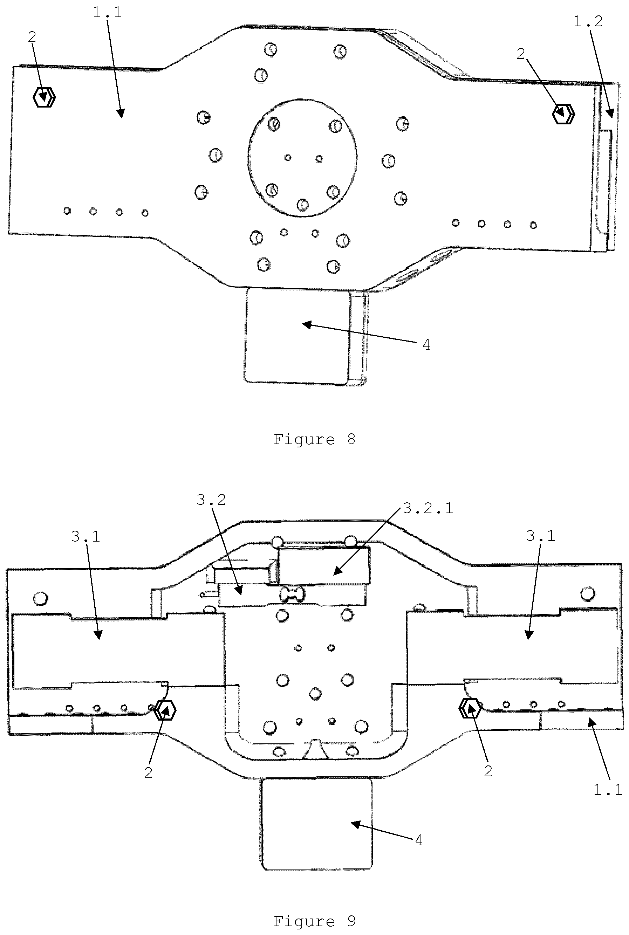

Figure 8 shows a rear isometric view of a second embodiment of the present invention.
Figure 9 shows a front isometric view of a second embodiment of the present invention without the plate.

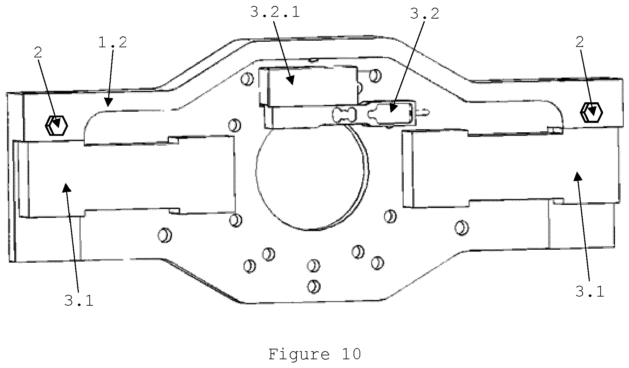

Figure 10 shows a rear isometric view of a second embodiment of the present invention without the base.

The elements and components of the equipment of the present invention and the elements necessary for the operation of the invention are marked in the figures:
1. chassis
   1.1. base
      1.1.1. base securing means
      1.1.2. secondary base securing means
   1.2. plate
      1.2.1. plate securing means
      1.2.2. secondary plate securing means
2. impact absorption means
3. functional element
   3.1. weighing element
   3.2. standard element
      3.2.1. standard weight
4. electronics box

### Detailed description of the invention

The term "substantially" is understood to mean that the description of the shape or position of an element of the present invention is not mathematically or geometrically exact, but that the shape or position of an element of the present invention is recognized by an expert in the field as having generically or approximately the described shape or position.

The terms "parallelepiped", "recto-rectangular", "semi-prismatic hexagonal", "circular", "prismatic hexagonal with two angles", "triangular", "L-shaped", and "inverted L-shaped" are understood to mean several possible shapes of embodiments of the components of the invention, which may also be functional in other shapes. Although not explicitly mentioned, the following shapes may be considered as possible alternative embodiments of the elements of the present invention when suitable for the purpose: circular, triangular, in parallelogram, in which rectangular, quadrilateral, rhombus, and trapezoidal are considered; pentagonal, hexagonal, heptagonal, octagonal, decagonal, in diamond and letter-shaped, as are the corresponding prism and semi-prism of all the previously described twodimensional shapes, both regular and irregular, pyramidal and spherical, among others.

The terms "centred", "vertical", "horizontal", "concentric", "inferior", "superior", "exterior", "frontal", "coaxial", "equidistant", and "parallel" are understood to mean several possible positions of embodiments of the components of the present invention, which may also be functional in other positions. Although not explicitly mentioned, the following positions may be considered as possible alternative embodiments of the elements of the present invention, when suitable for the purpose: horizontal, vertical, diagonal, coplanar, centred, perpendicular, tangential, over, under, superior, inferior, inner, outer, frontal, posterior, anterior, lateral, joined, separate, inside of and outside of, among others.

The term "L-shaped" is understood to mean a shape of an element of the equipment of the present invention wherein, for an observer placed facing one of the sidewalls of the element, the element presents a shape substantially equal to the shape of the letter "L". Likewise, "inverted L-shaped" is understood to mean an "L" shape where the letter "L" has been inverted with respect to a horizontal axis passing through the centre of the letter.

It should be noted that the terms above are used interchangeably in appropriate circumstances and that the embodiments of the invention described herein are capable of operating in shapes, forms, positions, and orientations other than those described or illustrated herein.

As will be clear to a person skilled in the art, due to the nature of the invention, the present invention makes it possible to weigh any object or material used in science or industry, such as in the fields of, inter alia but not exclusively, the automotive industry, the aircraft industry, the shipbuilding industry, the space industry, metallurgy, the thermoformed plastics industry, raw material industries, the building materials industry, civil engineering, chemical and biochemical industry, the food industry, the pharmaceutical industry, the medical industry, among others, in industrial production lines, as well as in domestic use or in commercial establishments.

As will be clear to an expert in the field, the application of the principles described here is not limited to the presented embodiments. Possible changes that may occur in the present invention, defined in number, remain within the scope of the present invention.

Weighing equipment according to the principles described herein can comprise any number of the features shown. Likewise, the principles described herein can be applied to any weighing equipment.

Additionally, although some embodiments present multiple new features, and as can be seen throughout this document, all features can be independent and it is not essential that all be used in a single embodiment.

Additionally, the embodiments described herein are merely examples of the effect intended with the present invention, so other ways known from the state of the art to achieve the same technical effect are equally applicable for other embodiments.

As will be clear to a person skilled in the art, the embodiments described herein can additionally feature any number of accessories known in the state of the art, such as, but not limited to, gyroscopes, goniometers, potentiometers, ammeters, gravimeters, speedometers, and accelerometers, among others.

According to the figures, the present invention comprises a side-weighing equipment comprising a chassis (1) comprising two plates: a base (1.1) and a plate (1.2). Between the two plates are functional elements (3), mainly one or more weighing elements (3.1) and at least one standard element (3.2). The chassis (1) further comprises an electronics box (4) coupled to it.

The chassis (1) can be made of any suitable material, such as, but not limited to, aluminium, steel, titanium, iron-, nickel-, copper- and/or tin-based materials, plastics, fibre composites, materials used in construction, among others, preferably aluminium.

The base (1.1) serves to secure the chassis (1) to an external object, such as, namely, but not exclusively, industrial robot arms or heads, walls, motor vehicles, cranes, furniture, professional workbenches, hooks, mechanical hands or clamps, among others. Therefore, the base (1.1) can have any format suitable to its purpose. In a preferred embodiment, the base (1.1) has a substantially recto-rectangular parallelepipedic shape. In a second embodiment, in a position substantially centred on the upper and lower face of the base (1.1) two substantially semi-prismatic hexagonal-shaped additions were placed. In another embodiment, the base (1.1) has an "L" shape. In this embodiment, the base (1.1) has a vertical wall and a horizontal wall that correspond respectively to the vertical arm of the "L" and to the horizontal arm of the "L".

The base (1.1) comprises at least one base securing means (1.1.1), preferably one, that allows the chassis (1) to be secured to any type of external support. In a preferred embodiment, the base securing means (1.1.1) is an opening substantially concentric with respect to the base (1.1), which preferably pierces the base (1.1) across its entire width. In this embodiment, the base securing means (1.1.1) may present any suitable shape for the purpose, preferably substantially circular, in which components are coupled that allow the securing of the base (1.1) to other external devices or support means such as, namely, but not exclusively, hooks, clamps, latches, grooves, protrusions, Velcro, adhesive, robot heads, among others. In other embodiments, the base securing means (1.1.1) may itself be equipment that allows the base (1.1) to be secured to external support means.

In a preferred embodiment, the base (1.1) additionally comprises a set of secondary base securing means (1.1.2), which may be:
- holes into which means are inserted that, together with devices that are inserted into the base securing means (1.1.1), help to better secure the chassis (1) to a means of support; or
- means that, together with devices that are inserted into the base securing means (1.1.1), help to better secure the chassis (1) to a means of support.

In a preferred embodiment, the base (1.1) additionally comprises further openings for placing impact absorption means (2). The function of the impact absorption means (2) is to prevent vibrations caused by the operation of other equipment that is close to the equipment of the present invention from causing changes in the measurement value obtained by the weighing equipment of the present invention. Additionally, the impact absorption means (2) allow for the absorption of shocks and vibrations caused by the movement of the equipment of the invention when it is, e.g., inserted and weighing, in an equipment or equipment component that is in motion. In a preferred embodiment, the impact absorbing means (2) are screws that are inserted into the plate (1.2). In this embodiment, the base (1.1) and the plate (2) have threaded holes, placed in a substantially coaxial and horizontal position, into which the screw is inserted. Thus, the impact absorption means (2) can also join the base (1.1) to the plate (1.2).

The chassis (1) additionally comprises the plate (1.2) whose function is to obtain the weight of objects or materials by the equipment of the present invention. The plate (1.2) can have any shape suitable for this purpose, but must have an inverted "L" shape. Due to the inverted "L" shape of the plate (1.2), it has a horizontal top and a vertical wall. Preferably, the plate (1.2) has the same shape as the base (1.1). In a preferred embodiment, the plate (1.2) has a substantially recto-rectangular parallelepipedic shape. In a second embodiment, in a position substantially centred on the upper and lower face of the plate (1.2) additions with a substantially hexagonal semi-prismatic shape were placed. In another embodiment, the plate (1.2) has a substantially prismatic hexagonal shape with two right angles.

The plate (1.2) comprises at least one plate securing means (1.2.1), preferably one, for securing objects or materials to the chassis (1) that enables the equipment of the present invention to perform weighing. In a preferred embodiment, the plate securing means (1.2.1) is an opening substantially concentric with respect to the vertical wall of the plate (1.2), which preferably pierces the vertical wall of the plate (1.2) across its entire width. In this embodiment, the plate securing means (1.2.1) may present any suitable shape for the purpose, preferably being substantially circular, in which the components that allow the securing of objects or materials to the chassis (1) are coupled, namely, but not exclusively, hooks, latches, clamps, grooved or protruding objects, Velcro, adhesive, among others. Additionally, another suitable means for attaching or grasping objects or materials, such as, notably but not exclusively, robot arms, mechanical grippers or hands, among others, may be secured to the plate securing means (1.2.1). In other embodiments, the plate securing means (1.2.1) may itself be a device that allows objects or materials to be secured to the chassis (1).

In a preferred embodiment, the plate (1.2) additionally comprises secondary plate securing means (1.2.2), which may be:
- holes into which means are inserted that, in conjunction with devices that are inserted into the plate securing means (1.2.1), help to better secure an object or material to the chassis (1); or
- means that, in conjunction with devices that are inserted into the plate securing means (1.2.1), help to better secure an object or material to the chassis (1).

In a preferred embodiment, the plate (1.2) additionally comprises further openings for placing impact absorption means (2). In a preferred embodiment, the impact absorbing means (2) are screws that are inserted into the base (1.1). In this embodiment, the base (1.1) and the plate (1.2) have threaded holes, placed in a substantially coaxial and horizontal position, into which the screw is inserted. Thus, the impact absorption means (2) can also join the plate (1.2) to the base (1.1).

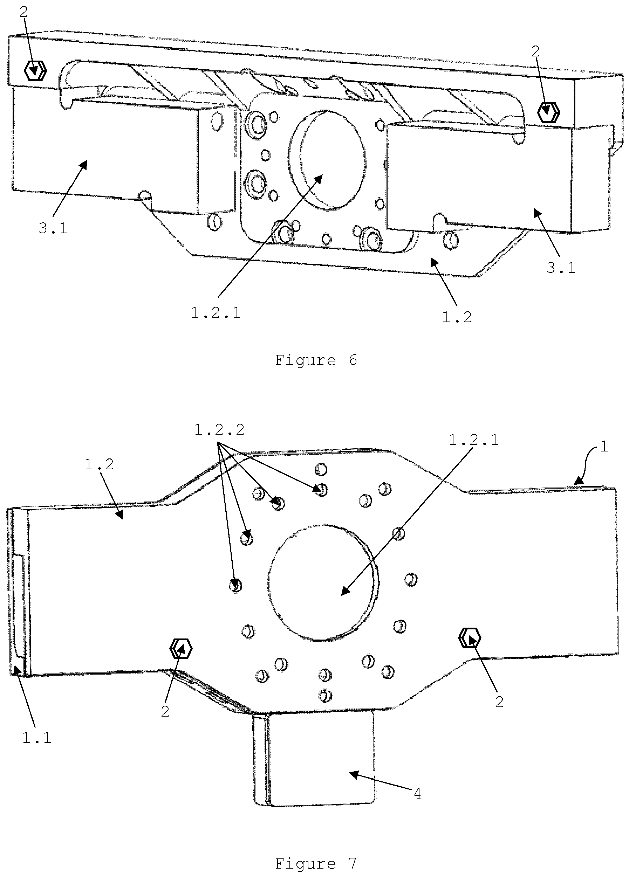

As visible in Figure 6, in a preferred embodiment, the plate (1.2) has, on the inner side of the plate (1.2), substantially triangular additions at the angle formed by the wall and the top. Such additions provide greater rigidity to the structure of the plate (1.2).

In a preferred embodiment, the equipment of the present invention is applied to a robot used in industrial production lines, preferably from the automotive industry. Such a robot, like the one shown in patent document EP0068770, comprises an arm secured to a body by one end, with the other end comprising a wrist and a hand coupled to the wrist. In the present embodiment, the chassis (1) is the wrist of the robot. That is, the chassis (1) is secured to the robot arm by the base securing means (1.1.1) and preferably by the secondary base securing means (1.1.2) and is attached to the robot hand by the plate securing means (1.2.1) and preferably by the secondary plate securing means (1.2.2). In a preferred embodiment, this securing is accomplished by means of quickchange elements. In other embodiments, this securing is accomplished by any other type of securing element or securing system known in the state of the art. In a preferred embodiment, an electronic connection is made between the weighing equipment of the present invention and the robot, which allows power to be supplied to the weighing equipment and data to be exchanged between the weighing equipment and the robot. In this type of equipment, the scale of the present invention can weigh while the robot is in motion.

Inside the chassis (1) are the functional elements (3) of the weighing equipment of the present invention. More specifically, the functional elements (3) are located between the base (1.1) and the plate (1.2). Because the plate (1.2) has an inverted "L" shape, the functional elements (3) are also under the top of the plate (1.2). In the embodiment wherein the base (1.1) has an "L" shape, the securing elements (3) are also on the bottom wall of the base (1.1). That is, the functional elements (3) are housed in the space between the upper wall of the base (1.1), the lower wall of the plate (1.2), the lower wall of the base (1.1), and the upper wall of the plate (2.1).

The functional elements (3) comprise the weighing elements (3.1) and the standard elements (3.2). The weighing elements (3.1) are the components of the present invention responsible for measuring weight. There is at least one weighing element (3.1), preferably two. The bottom side of the top of the plate (1.2) is in contact with the top side of the weighing elements (3.1). In a preferred embodiment, the functional elements (3) are secured to the base (1.1) both by the vertical wall and, when present, by the horizontal wall. In a preferred embodiment, each weighing element (3.1) is additionally in contact on the front side with the vertical wall of the base (1.1) and on the rear side with the vertical wall of the plate (1.2). In a preferred embodiment, each weighing element (3.1) has a substantially recto-rectangular parallelepiped shape.

The position of each weighing element (3.1) must be such that the force applied to the plate (1.2) is fully and evenly captured by the weighing elements (3.1). In embodiments where there are an odd number of weighing elements (3.1), one weighing element (3.1) must be positioned so that its centre is substantially coaxial with the centre of the plate (1.2) and the others, if there are more than one, must be substantially equidistant from the centre of the plate (1.2) and on opposite sides with respect to the centre of the plate (1.2). In embodiments where there is an even number of weighing elements (3.1), the two weighing elements (3.1) closest to the centre of the plate (1.2) must be positioned so that they are both substantially equidistant from the centre of the plate (1.2) and on opposite sides with respect to the centre of the plate (1.2). In embodiments wherein there are at least two weighing elements (3.1), the weighing elements (3.1) are all substantially equidistant from each other and in a substantially coaxial position with an axis parallel to the top and to the vertical wall of the plate (1.2).

Each weighing element (3.1) is any sensor that can measure the weight of objects. In a preferred embodiment, each weighing element (3.1) is a load cell weight sensor. In other embodiments, the weighing element (3.1) can be a single point weight sensor, S-type sensor, tension and compression sensor, or a piezoelectric sensor, among others.

The equipment of the present invention comprises at least one standard element (3.2), preferably one. The at least one standard element (3.2) comprises, similarly to the weighing elements (3.1), a weight meter. However, the standard element (3.2) is not in contact with the plate (1.2), being secured to the base (1.1). The standard element (3.2) serves to establish a standard value with which the weighing equipment of the present invention can compare the weight being measured by the weighing elements (3.1). As such, the standard element (3.2) comprises a standard weight (3.2.1) that is secured to the upper side of the standard element (3.2) weight gauge. Like the weighing elements (3.1), the standard element (3.2) comprises some kind of sensor to measure the weight of objects. In a preferred embodiment, each standard element (3.2) comprises a load cell weight sensor. In other embodiments, the standard element (3.2) can be a single point weight sensor, S-type sensor, tension and compression sensor, or a piezoelectric sensor, among others.

In a preferred embodiment, the standard element (3.2) is in a position substantially centred with the chassis (1). Additionally, the standard weight (3.2.1) can have any suitable weight to be used as a standard. In a preferred embodiment, the standard weight (3.2.1) can have any weight between 0.01 kg and 10 kg, preferably between 0,1 kg and 5 kg, more preferably between 0,5 kg and 3 kg, more specifically between 1 kg and 2 kg.

When an object or material is secured to the plate (1.2) on the outside of the vertical wall of the plate (1.2), it will exert a force on the plate (1.2) in the direction equal to the force of gravity, which is transmitted to the weighing elements (3.1) as they are in contact with the plate (1.2). However, in practical terms, weighing is carried out substantially vertically. The presence of the standard element (3.2) takes into account the deviations that exist in practice, preventing angular deviations in weighing from causing deviations in the measured value.

Coupled to the chassis (1) is an electronics box (4) which comprises all the electronic elements necessary for the correct operation of the invention. The electronics box (4) may thus comprise any electronic element used for processing and sending information, such as, but not limited to, a processor, primary memory, secondary memory, an adapter for wireless connection to any known state-of-the-art wireless technology, visual or audible alarms, among others. Wireless connections include technologies such as, but not limited to, Ethernet, Wi-Fi, Bluetooth, Bluetooth Low Energy, Radio-Frequency Identification (RFID), Near Field Communication (NFC), Global System for Mobile Communication (GMS), Zigbee, 3G, 4G, 5G, Microwave, and Long Range (LoRa), among others, and others that may appear in the future. The wireless connection is important so that a user can easily observe on a fixed or mobile electronic device the weight measured by the weighing equipment of the present invention, as well as information about the technical operation, and can adjust properties of the weighing equipment of the present invention and take control of the device in which the weighing equipment of the present invention is comprised, if that is the case. Thus, the fixed or mobile electronic device can be selected, notably, but not exclusively, from among tablets, smartphones, laptops, desktop computers, control devices, joysticks, among others. In a preferred embodiment, the electronics box (4) is connected to the functional elements (3), receiving the information from the functional elements (3). The electronics box (4) may further preferably comprise electronic protection components, such as, notably, but not exclusively, short-circuit protection, radio-frequency protection, and undervoltage blocking, among others.

### Weighing method

To start weighing, the chassis (1) must first be secured to an external means of support. This is accomplished by securing the base (1.1) to an external means of support by the base securing means (1.1.1) and optionally by the secondary base securing means (1.1.2). Subsequently, an object or material is secured to the plate (1.2) by the plate securing means (1.2.1) and optionally by the secondary plate securing means (1.2.2). Weighing is then performed by lifting the chassis (1). The weight of the object or material pulls down the plate (1.2), which puts pressure on at least one weighing element (3.1). A provisional value of the weighing is obtained, which is then compared with the value obtained by the standard element (3.2). Such a comparison normalizes any angular deviations that occur in the position of the chassis (1) and/or the plate (1.2). Although the chassis (1) is placed substantially vertically, it will never, for technically obvious reasons, be placed completely vertically. Thus, comparison with the standard element (3.2) adjusts these angular deviations, thus obtaining a definitive weighing value. This calculation work is performed by means of a processor that is present either in the electronics box (4) or in a remote control device of the weighing equipment of the present invention.

## Claims

1. Weighing equipment for weighing in motion objects or materials suspended in a lateral position relative to the weighing equipment comprising a chassis (1) comprising:
- a base (1.1) to secure the chassis (1) to an external object;
- a plate (1.2) for obtaining the weight of objects or materials;
- at least one weighing element (3.1) being secured to the base (1.1) and responsible for measuring weight;
- at least one standard element (3.2) which serves to establish a standard value with which the weighing equipment can compare the weight being measured by the weighing elements (3.1);
**characterised by:**
- the bottom side of the top of the plate (1.2) is in contact with the top side of the at least one weighing element (3.1);
- the standard element (3.2) being in a position substantially centred with the chassis (1) and not in contact with the plate (1.2), being secured to the base (1.1);
- the standard element (3.2) comprising a standard weight (3.2.1) that is secured to the upper side of the standard element (3.2);
- further comprising impact absorption means (2) for the absorption of shocks and vibrations caused by the movement of the weighing equipment.

2. Equipment according to the preceding claim, **characterised in that** the impact absorption means (2) are inserted into the plate (1.2) and the base (1.1).

3. Equipment according to any of the preceding claims, wherein the base (1.1) comprises at least one base securing means (1.1.1).

4. Equipment according to any of the preceding claims, wherein the base securing means (1.1.1) is an opening for coupling the components for attaching the chassis (1) to external support means.

5. Equipment according to any of the preceding claims, wherein the base (1.1) additionally comprises secondary base securing means (1.1.2) that, together with devices that are inserted into the base securing means (1.1.1), help to better secure the chassis (1) to a means of support.

6. Equipment according to any of the preceding claims, wherein the plate (1.2) comprises at least one plate securing means (1.2.1) placed on the vertical wall of the plate (1.2).

7. Equipment according to the preceding claim, wherein the plate securing means (1.2.1) is an opening for coupling components that secure objects or materials to the chassis (1).

8. Equipment according to any of the preceding claims, wherein the plate (1.2) additionally comprises secondary plate securing means (1.2.2) that, in conjunction with devices that are inserted into the plate securing means (1.2.1), help to better secure an object or material to the chassis (1).

9. Equipment according to any of the preceding claims, wherein the plate (1.2) additionally comprises, on the inner side of the plate (1.2), substantially triangular additions at the angle formed by the wall and the top.

10. Equipment according to any of the preceding claims, wherein the impact absorption means (2) are screws that are inserted into the base (1.1).

11. Equipment according to any of the preceding claim, wherein the functional elements (3) are housed in the space between the upper wall of the base (1.1), the lower wall of the plate (1.2), the lower wall of the base (1.1), and the upper wall of the plate (2.1).

12. Equipment according to any of the preceding claims, **characterized by** comprising two weighing elements (3.1) secured to the base (1.1), both by the vertical wall and, when present, by the horizontal wall, and additionally being in contact, on the front side, with the vertical wall of the base (1.1) and, on the rear side, with the vertical wall of the plate (1.2).

13. Equipment according to any of the preceding claims, wherein the weighing elements (3.1) and the standard elements (3.2) are load cell weight sensors, single point weight sensors, S-type sensors, tension and compression sensors, or piezoelectric sensors.

14. Method of weighing using the equipment claimed in the claims 1 to 13, comprising the following steps:
a) the chassis (1) must first be secured to an external means of support;
b) simultaneously, the base (1.1) must be secured to an external means of support by the base securing means (1.1.1) and optionally by the secondary base securing means (1.1.2);
c) the chassis (1) is lifted;
d) the weight of the object or material pulls down the plate (1.2), which puts pressure on the at least one weighing element (3.1);
e) a provisional value of the weight of the object is obtained, which is then compared with the value obtained by the standard element (3.2), which normalizes any angular deviations that occur in the position of the chassis (1) and/or the plate (1.2);
f) the comparison with the standard element (3.2) adjusts these angular deviations, obtaining a definitive weighing value;
g) the calculation work is performed by means of a processor that is present either in an electronics box (4) or in a remote-control device of the weighing equipment of the present invention.

15. Use of the equipment claimed in claims 1 to 13 in industrial production lines.

## Patentansprüche

1. Wiegeeinrichtung zum Wiegen von sich in Bewegung befindenden Objekten oder Materialien, die in einer seitlichen Position relativ zur Wiegeeinrichtung aufgehängt sind, umfassend ein Chassis (1), das aufweist:
- eine Basis (1.1) zur Befestigung des Chassis (1) an einem externen Objekt;
- eine Platte (1.2) zur Ermittlung des Gewichts von Objekten oder Materialien;
- mindestens ein Wägeelement (3.1), das an der Basis (1.1) befestigt ist und zur Gewichtsmessung dient;
- mindestens ein Standardelement (3.2), das dazu dient, einen Referenzwert bereitzustellen, mit dem das durch das Wägeelement (3.1) gemessene Gewicht verglichen werden kann;
**dadurch gekennzeichnet, dass:**
- die Unterseite des oberen Bereichs der Platte (1.2) in Kontakt mit der Oberseite des mindestens einen Wägeelements (3.1) steht;
- das Standardelement (3.2) sich in einer im Wesentlichen zentrierten Position relativ zum Chassis (1) befindet, keinen Kontakt zur Platte (1.2) hat und an der Basis (1.1) befestigt ist;
- das Standardelement (3.2) ein Standardgewicht (3.2.1) aufweist, das an der Oberseite des Standardelements (3.2) befestigt ist;
- zusätzlich Stoßdämpfungsmittel (2) vorgesehen sind, die der Dämpfung von durch die Bewegung der Wiegeeinrichtung verursachten Erschütterungen und Vibrationen dienen.

2. Vorrichtung vorstehendem Anspruch, **dadurch gekennzeichnet, dass** die Stoßdämpfungsmittel (2) in die Platte (1.2) und die Basis (1.1) eingesetzt sind.

3. Vorrichtung nach einem der vorhergehenden Ansprüche, **dadurch gekennzeichnet, dass** die Basis (1.1) mindestens ein Basisbefestigungsmittel (1.1.1) aufweist.

4. Vorrichtung nach einem der vorhergehenden Ansprüche, **dadurch gekennzeichnet, dass** das Basisbefestigungsmittel (1.1.1) eine Öffnung zur Kopplung von Komponenten zur Befestigung des Chassis (1) an externen Trägermitteln ist.

5. Vorrichtung nach einem der vorhergehenden Ansprüche, **dadurch gekennzeichnet, dass** die Basis (1.1) zusätzlich sekundäre Basisbefestigungsmittel (1.1.2) aufweist, die zusammen mit in das Basisbefestigungsmittel (1.1.1) eingesetzten Vorrichtungen eine verbesserte Befestigung des Chassis (1) an einem Trägermittel ermöglichen.

6. Vorrichtung nach einem der vorhergehenden Ansprüche, **dadurch gekennzeichnet, dass** die Platte (1.2) mindestens ein Plattenbefestigungsmittel (1.2.1) an der vertikalen Wand der Platte (1.2) aufweist.

7. Vorrichtung nach dem vorangegangenen Anspruch, **dadurch gekennzeichnet, dass** das Plattenbefestigungsmittel (1.2.1) eine Öffnung zur Kopplung von Komponenten zur Befestigung von Objekten oder Materialien am Chassis (1) ist.

8. Vorrichtung nach einem der vorhergehenden Ansprüche, **dadurch gekennzeichnet, dass** die Platte (1.2) zusätzlich sekundäre Plattenbefestigungsmittel (1.2.2) aufweist, die gemeinsam mit in das Plattenbefestigungsmittel (1.2.1) eingesetzten Vorrichtungen zur verbesserten Befestigung eines Objekts oder Materials am Chassis (1) dienen.

9. Vorrichtung nach einem der vorhergehenden Ansprüche, **dadurch gekennzeichnet, dass** die Platte (1.2) an der Innenseite der Platte (1.2) im Bereich des Winkels zwischen Wand und Oberseite im Wesentlichen dreieckige Verstärkungen aufweist.

10. Vorrichtung nach einem der vorhergehenden Ansprüche, **dadurch gekennzeichnet, dass** die Stoßdämpfungsmittel (2) Schrauben sind, die in die Basis (1.1) eingesetzt sind.

11. Vorrichtung nach einem der vorhergehenden Ansprüche, **dadurch gekennzeichnet, dass** die Funktionselemente (3) in dem Raum zwischen der oberen Wand der Basis (1.1), der unteren Wand der Platte (1.2), der unteren Wand der Basis (1.1) und der oberen Wand der Platte (2.1) angeordnet sind.

12. Vorrichtung nach einem der vorhergehenden Ansprüche, **dadurch gekennzeichnet, dass** zwei Wägeelemente (3.1) an der Basis (1.1) befestigt sind, jeweils sowohl an der vertikalen als auch, sofern vorhanden, an der horizontalen Wand, wobei sie zusätzlich vorderseitig mit der vertikalen Wand der Basis (1.1) und rückseitig mit der vertikalen Wand der Platte (1.2) in Kontakt stehen.

13. Vorrichtung nach einem der vorhergehenden Ansprüche, **dadurch gekennzeichnet, dass** die Wägeelemente (3.1) und die Standardelemente (3.2) aus Wägezellen, Single-Point-Wägezellen, S-Typ-Sensoren, Zug- und Drucksensoren oder piezoelektrischen Sensoren bestehen.

14. Verfahren zum Wiegen unter Verwendung der Vorrichtung nach einem der Ansprüche 1 bis 13, umfassend die folgenden Schritte:
a) das Chassis (1) wird zunächst an einem externen Trägermittel befestigt;
b) gleichzeitig wird die Basis (1.1) über das Basisbefestigungsmittel (1.1.1) und gegebenenfalls über das sekundäre Basisbefestigungsmittel (1.1.2) an einem externen Trägermittel befestigt;
c) das Chassis (1) wird angehoben;
d) das Gewicht des Objekts oder Materials zieht die Platte (1.2) nach unten, wodurch Druck auf das mindestens eine Wägeelement (3.1) ausgeübt wird;
e) ein vorläufiger Gewichtswert des Objekts wird ermittelt, der mit dem vom Standardelement (3.2) gelieferten Wert verglichen wird, welcher etwaige Winkellagenabweichungen des Chassis (1) und/oder der Platte (1.2) ausgleicht;
f) durch den Vergleich mit dem Standardelement (3.2) werden diese Winkellagenabweichungen korrigiert, wodurch ein endgültiger Wägewert erzielt wird;
g) die Berechnung erfolgt durch einen Prozessor, der sich entweder in einer Elektronikbox (4) oder in einem Fernsteuergerät der Wiegeeinrichtung gemäß der vorliegenden Erfindung befindet.

15. Verwendung der Vorrichtung nach einem der Ansprüche 1 bis 13 in industriellen Fertigungsstraßen.

## Revendications

1. Équipement de pesage pour peser les objets mobiles ou les matériaux suspendus en position latérale relativement à l'équipement de pesage comprenant un châssis (1) comprenant:
- une base (1.1) pour fixer le châssis (1) sur un objet externe;
- une plaque (1.2) pour obtenir le poids des objets ou des matériaux;
- au moins un élément de pesée (3.1) est fixé sur la base (1.1) et consiste à mesurer le poids;
- au moins un élément standard (3.2) qui sert à définir une valeur standard avec laquelle l'équipement de pesage peut comparer le poids qui est mesuré au moyen des éléments de pesée (3.1);
**caractérisé en ce que:**
- la partie inférieure du sommet de la plaque (1.2) est en contact avec la partie supérieure d'au moins un élément de pesée (3.1);
- l'élément standard (3.2) est dans une position sensiblement centrée par rapport au châssis (1) et n'est pas en contact avec la plaque (1.2), en étant fixé sur la base (1.1);
- l'élément standard (3.2) comprend un poids standard (3.2.1) qui est fixé sur la partie supérieure de l'élément standard (3.2);
- comprend par ailleurs des systèmes d'absorption d'impact (2) pour l'absorption des chocs et des vibrations causés par le mouvement de l'équipement de pesage.

2. Équipement selon la revendication précédente, **caractérisé en ce que** les systèmes d'absorption d'impact (2) sont insérés dans la plaque (1.2) et la base (1.1).

3. Équipement selon l'une quelconque des revendications précédentes, dans lequel la base (1.1) comprend au moins un dispositif de fixation à la base (1.1.1).

4. Équipement selon l'une quelconque des revendications précédentes, dans lequel le dispositif de fixation à la base (1.1.1) est une ouverture pour coupler les composants en vue de relier le châssis (1) à un dispositif de support externe.

5. Équipement selon l'une quelconque des revendications précédentes, dans lequel la base (1.1) comprend également un dispositif secondaire de fixation à la base (1.1.2) qui, conjointement avec les systèmes qui sont insérés dans le dispositif de fixation à la base (1.1.1), assure une meilleure fixation du châssis (1) à un dispositif de support.

6. Équipement selon l'une quelconque des revendications précédentes, dans lequel la plaque (1.2) comprend au moins un dispositif de fixation à la plaque (1.2.1) placé sur la paroi verticale de la plaque (1.2).

7. Équipement selon la revendication précédente, dans lequel le dispositif de fixation à la plaque (1.2.1) est une ouverture pour coupler les composants qui fixent les objets ou les matériaux sur le châssis (1).

8. Équipement selon l'une quelconque des revendications précédentes, dans lequel la plaque (1.2) comprend également un dispositif secondaire de fixation à la plaque (1.2.2) qui, conjointement avec les systèmes qui sont insérés dans le dispositif de fixation à la plaque (1.2.1), assure une meilleure fixation de l'objet ou du matériau sur le châssis (1).

9. Équipement selon l'une quelconque des revendications précédentes, dans lequel la plaque (1.2) comprend également, sur la partie interne de la plaque (1.2), des ajouts sensiblement triangulaires à l'angle formé par la paroi et le sommet.

10. Équipement selon l'une quelconque des revendications précédentes, dans lequel les dispositifs d'absorption d'impact (2) sont des vis qui sont insérés dans la base (1.1).

11. Équipement selon l'une quelconque des revendications précédentes, dans lequel les éléments fonctionnels (3) sont disposés dans l'espace situé entre la paroi supérieure de la base (1.1), la paroi inférieure de la plaque (1.2), la paroi inférieure de la base (1.1) et la paroi supérieure de la plaque (2.1).

12. Équipement selon l'une quelconque des revendications précédentes, **caractérisé en ce qu'**il comprend deux éléments de pesage (3.1) fixés sur la base (1.1), les deux par la paroi verticale et, lorsqu'elle existe, par la paroi horizontale, et en étant également en contact, sur la face avant, avec la paroi verticale de la base (1.1) et, sur la face arrière, avec la paroi verticale de la plaque (1.2).

13. Équipement selon l'une quelconque des revendications précédentes, dans lequel les éléments de pesage (3.1) et les éléments standard (3.2) sont des capteurs de poids à cellule de charge, des capteurs de poids à point unique, des capteurs de type S, des capteurs de tension et de compression ou des capteurs piézoélectriques.

14. Méthode de pesage utilisant l'équipement revendiqué dans les revendications 1 à 13, comprenant les étapes suivantes:
a) le châssis (1) doit d'abord être fixé sur un dispositif de support externe;
b) en même temps, la base (1.1) doit être fixée sur un dispositif de support externe à l'aide du dispositif de fixation à la base (1.1.1) et, facultativement, à l'aide du dispositif secondaire de fixation à la base (1.1.2);
c) le châssis (1) est levé;
d) le poids de l'objet ou du matériau entraîne l'inclinaison de la plaque (1.2), laquelle exerce une pression sur au moins un élément de pesée (3.1);
e) une valeur provisoire du poids de l'objet est obtenue, laquelle est ensuite comparée à la valeur obtenue par l'élément standard (3.2) qui normalise tout écart angulaire survenant dans la position du châssis (1) et/ou de la plaque (1.2);
f) la comparaison avec l'élément standard (3.2) ajuste ces écarts angulaires, ce qui résulte en une valeur de pesée définitive;
g) les travaux de calcul sont réalisés par un processeur présent soit dans un boîtier électronique (4) soit dans un appareil de commande à distance de l'équipement de pesage de la présente invention.

15. Utilisation de l'équipement selon les revendications 1 à 13 dans les chaînes de production industrielles.
